# EUROPÄISCHE PATENTSCHRIFT

(11) **EP 1 827 946 B1**
(45) Veröffentlichungstag und Bekanntmachung des Hinweises auf die Patenterteilung: **28.05.2008**
(21) Anmeldenummer: 05759238.8
(22) Anmeldetag: 17.06.2005
(51) Int. Cl.: B62B 3/18

(54) **STAPELBARER EINKAUFSWAGEN**
STACKABLE SHOPPING TROLLEY
CHARIOT DE SUPERMARCHE EMBOITABLE

(30) Priorität: 29.06.2004 DE 10431237
(43) Veröffentlichungstag der Anmeldung: 05.09.2007
(73) Patentinhaber: WANZL METALLWARENFABRIK GMBH, D-89336 Leipheim (DE)
(72) Erfinder: HONOLD, Günther, 89340 Leipheim/Riedheim (DE); SCHEFFLER, Hans, 89233 Neu-Ulm/Burlafingen (DE); SCHICKLING, Andreas, 89278 Nersingen (DE)
(86) Internationale Anmeldenummer: PCT/DE2005/001085
(87) Internationale Veröffentlichungsnummer: WO 2006/000184

(56) Entgegenhaltungen:
- EP-A- 0 738 645
- DE-A1- 3 444 278
- GB-A- 2 316 368

## Beschreibung

Die Erfindung betrifft einen stapelbaren Einkaufswagen, mit einem Fahrgestell, das wenigstens einen Korb trägt, mit einer Schiebeeinrichtung und mit einer im rückwärtigen Bereich angeordneten Ablage, die einen Abstellabschnitt zur Aufnahme von Gegenständen aufweist, wobei die Ablage unter Inanspruchnahme von mindestens einem Führungsmittel aus einer Verstaustellung nach rückwärts herausklappbar oder herausziehbar ist und wobei die Ablage in einer ersten Gebrauchslage zum Abstellen kleinerer Gegenstände geeignet und in einer zweiten Gebrauchslage zur Aufnahme größerer Gegenstände, insbesondere von Getränkekisten bestimmt ist.

Die EP 0 738 645 A1 zeigt einen Einkaufswagen, dessen Ablage in der Verstaustellung bereits eine erste Gebrauchslage zur Aufnahme kleinerer Gegenstände, z.B. von PET-Flaschengebinden, einnimmt. Man will mit dieser Lösung erreichen, dass Benutzer solcher Einkaufswagen auf die Existenz einer Ablage hingewiesen werden, ohne dass es z.B. eines zusätzlichen, am Einkaufswagen angebrachten Hinweisschildes bedarf. Im Sinne einer Reduzierung der Fertigungskosten des Einkaufswagens ist diese Lösung durchaus zu begrüßen. Allerdings handelt man sich den Nachteil ein, dass die Ablage in ihrer ersten Gebrauchslage, die ja gleichzeitig die Verstaustellung bildet, doch ein Stück weit nach hinten vorsteht und so das bequeme Gehen einer den Einkaufswagen schiebenden Person zu hindern vermag. Dieser Umstand wird besonders dann als lästig empfunden, wenn die Ablage in der ersten Gebrauchslage nicht beladen ist und somit für den Benutzer des Einkaufswagens nur ein Teil darstellt, das irgendwie im Wege ist. Natürlich könnte man an der hinteren Querverbindung einen Stoßdämpfer anbringen. Die Kosten für die Herstellung und das Anbringen eines solchen Stoßdämpfers wären allerdings dann noch höher als das Anbringen des bereits eingangs erwähnten Hinweisschildes.

In der DE 297 14 613 U1 wird ein Einkaufswagen beschrieben, der mit einer im rückwärtigen Bereich des Einkaufswagens angeordneten, zum Tragen größerer Gegenstände bestimmten Ablage ausgestattet ist. Die Ablage ist in Längsführungen geführt und lässt sich aus einer Nichtgebrauchslage, in der sie sich unterhalb des wenigstens einen Korbes befindet, nach rückwärts in eine Gebrauchslage herausziehen, in der sie in der Lage ist, beispielsweise eine Getränkekiste zu tragen. Die Ablage kann bei Bedarf auch nur ein relativ kleines Stück herausgezogen werden, so dass dann auf ihr ein kleinerer Gegenstand abgestellt werden kann. In diesem Falle ist jedoch zu befürchten, dass sich die Ablage beim Bewegen eines derart beladenen Einkaufswagens, insbesondere beim Fahren auf holprigem Boden, wie dieser bei gepflasterten Parkplätzen von Selbstbedienungsgeschäften anzutreffen ist, aufgrund der entstehenden Erschütterungen von selbst immer weiter nach hinten herausbewegt, so dass die Gefahr besteht, dass der kleinere Gegenstand von der Ablage herabfällt und/oder dass man sich die Beine an die immer weiter nach hinten herausragende Ablage anschlägt. Dieser Zustand ist unbefriedigend.

Es ist Aufgabe der Erfindung, einen Einkaufswagen der hier vorliegenden Art so zu gestalten,
- dass sich die in der Verstaustellung befindliche Ablage nicht als ein das bequeme Gehen störendes Hindernis erweist,
- dass die Ablage nicht nur in ihrer zweiten Gebrauchslage, sondern auch in der ersten Gebrauchslage sicher positioniert ist und
- dass es durch entsprechende Gestaltung der Ablage dem Benutzer des Einkaufswagens leicht gemacht wird zu erkennen, dass sich mit der Ablage zwei Gebrauchslagen nutzen lassen.

Die Lösung der Aufgabe steht darin, dass die Ablage aus der Verstaustellung heraus in die erste Gebrauchslage bewegbar ist, in der sie eine vorbestimmte, durch mindestens ein Anschlagmittel gesicherte Lage einnimmt, aus der sie sich durch Aufhebung der Wirkung des wenigstens einen Anschlagmittels in die zweite Gebrauchslage bewegen lässt.
Die Vorteile der aufgefundenen Lösung sind beachtlich. So nimmt die Ablage in ihrer Verstaustellung, in der sie nicht beladen werden kann, eine Position ein, in der sie sich fast ausschließlich unter dem wenigstens einen Korb befindet. Die Ablage ragt nicht nach hinten vor und hindert deshalb auch nicht. Die zum Schieben des Einkaufswagens notwendige Beinfreiheit kann jener Beinfreiheit gleichgesetzt werden, die ein gleicher, jedoch ohne Ablage ausgestatteter Einkaufswagen aufweist.
Durch die Verwendung von an der Ablage befindlichen Anschlagmitteln ist es in vorteilhafter Weise möglich, die Position der ersten Gebrauchslage der Ablage sicher vorzubestimmen. Je nachdem wie die Anschlagmittel positioniert werden, lässt sich der Aufnahmebereich der Ablage einer ganz bestimmten oder bevorzugten Warensorte anpassen, beispielsweise jener Sorte in Form von schrumpfverpackten PET-Flaschengebinden. Ferner sind die Anschlagmittel so gestaltet, dass die beladene Ablage in ihrer ersten Gebrauchslage beim Bewegen des Einkaufswagens ihre Lage beibehält und nicht von selbst, für den Benutzer unvermutet, die zweite Gebrauchslage aufsucht.
Schließlich ist das Zusammenwirken der Ablage mit den Führungsmitteln so gewählt, dass beim Bewegen der Ablage aus der Verstaustellung die Ablage zuerst die erste Gebrauchslage erreicht oder einnimmt und dass die zweite Gebrauchslage erst dann erreichbar ist, wenn die Wirkung der Anschlagmittel, welche die Ablage in der ersten Gebrauchslage hält oder zu halten versucht, durch den Benutzer aufgehoben wird. Das Verhalten der Ablage bei den eben beschriebenen Bewegungsvorgängen erleichtert es dem Benutzer zu erkennen, dass sich mit der Ablage zwei Gebrauchslagen einstellen und nutzen lassen.

Die Erfindung wird anhand von Ausführungsbeispielen näher erläutert. Es zeigt
- Fig. 1: einen Einkaufswagen, dessen Ablage sich in der Verstaustellung befindet;
- Fig. 2: den gleichen Einkaufswagen mit in der ersten Gebrauchslage befindlichen Ablage;
- Fig. 3: den in Fig. 1 und 2 beschriebenen Einkaufswagen mit beladener, in der ersten Gebrauchslage befindlichen Ablage;
- Fig. 4: den in Fig. 1 und 2 gezeigten Einkaufswagen mit beladener, in der zweiten Gebrauchslage befindlichen Ablage;
- Fig. 5 und 6: zwei Detailansichten mit einem lageveränderbaren Arretiermittel sowie
- Fig. 7: eine weitere Ausgestaltung eines Einkaufswagens mit Ablage.

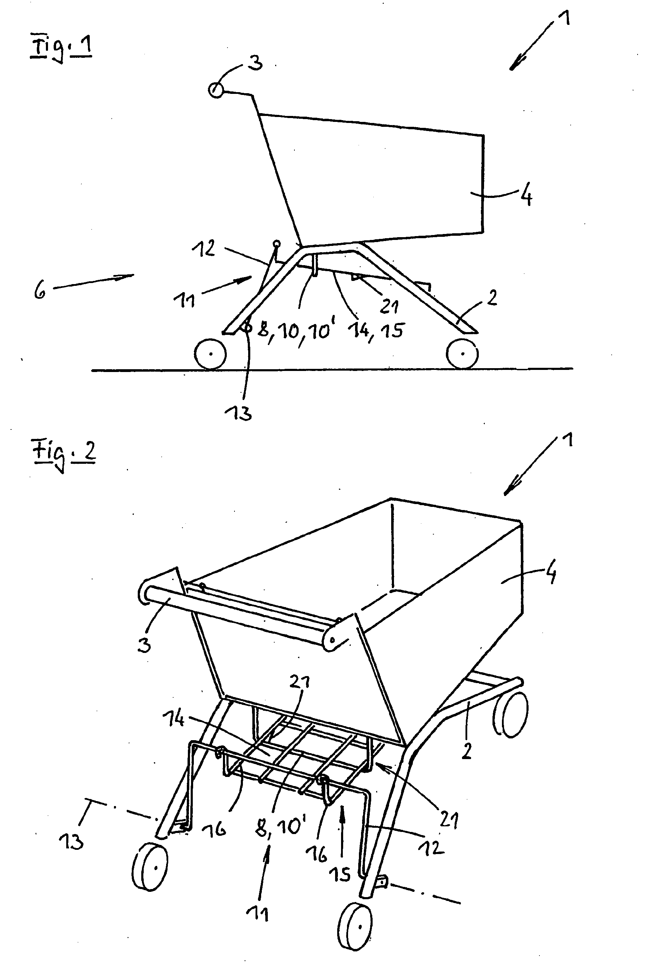

Die in den nachfolgenden Zeichnungen dargestellten Einkaufswagen 1 entsprechen in ihrem Grundaufbau jenen Einkaufswagen 1, wie sie in den eingangs genannten Patentschriften beschrieben sind. Natürlich sind konstruktive und gestalterische Unterschiede möglich, doch weisen alle in den Figuren 1 bis 7 dargestellten Einkaufswagen 1 ein Fahrgestell 2 auf, das wenigstens ein Behältnis in der bevorzugten Form eines Korbes 4 trägt. Die Einkaufswagen 1 sind mit einer Schiebeeinrichtung 3 ausgestattet, die sich im rückwärtigen Bereich 6 des Einkaufswagens 1 befindet und die am Korb 4 oder am Fahrgestell 2 vorgesehen ist. Die Einkaufswagen 1 sind ferner in bekannter Weise so gestaltet, dass sich gleiche Einkaufswagen 1 ineinanderschieben, also stapeln lassen, wobei, um diesen Zweck erfüllen zu können, die Rückwand 5 der Körbe 4 in bewährter Weise um eine horizontale Achse schwenkbar aufgehängt ist. Alle Einkaufswagen 1 sind mit einer in ihrem rückwärtigen Bereich 6 angeordneten, zum Abstellen von Gegenständen bestimmten Ablage 11 ausgestattet, die unter Inanspruchnahme von Führungsmitteln nach rückwärts herausklappbar oder herausziehbar ist und die sich entweder von Hand oder beim Stapeln mehrerer Einkaufswagen 1 von einem hinteren einzuschiebenden Einkaufswagen 1 in die Verstaustellung bewegen lässt, in der sie sich größtenteils unter dem wenigstens einen Korb 4 befindet.

Fig. 1 zeigt einen mit einem Fahrgestell 2, mit einer Schiebeeinrichtung 3 und mit einem Korb 4 ausgestatteten Einkaufswagen 1. Unterhalb der Schiebeeinrichtung 3 und im rückwärtigen Bereich 6 des Einkaufswagens 1 angeordnet ist eine mit einem Abstellabschnitt 14 ausgestattete Ablage 11 vorgesehen, die zum Tragen von Gegenständen bestimmt ist. Die Ablage 11 weist ein in bekannter Weise um eine horizontale Achse 13 bewegbares Schwenkteil 12 auf, mit dem der Abstellabschnitt 14 in ebenfalls bekannter Weise gelenkig verbunden ist. Die Ablage 11 orientiert sich in ihrer Grundbauweise beispielhaft an jener Ablage, die z.B. im deutschen Gebrauchsmuster G 85 08 238.4 ausführlich beschrieben ist. Insofern erübrigt sich hier an dieser Stelle eine erneute detaillierte Beschreibung der Ablage 11. Der Abstellabschnitt 14 der Ablage 11 liegt mit seiner Unterseite 15 auf einem Querstab 8 auf, der Bestandteil eines am Fahrgestell 2 befestigten U-förmigen Bügels 10' ist, der durch entsprechende Gestaltung die Funktion von wenigstens einem Führungsmittel 10 übernimmt. An der Unterseite 15 des Abstellabschnittes 14, welcher den Bügel 10' durchdringt, sind Anschlagmittel 21 angeordnet, deren Funktion nachfolgend beschrieben ist.

Fig. 2 zeigt den in Fig. 1 beschriebenen Einkaufswagen 1 in räumlicher Darstellung. Die Ablage 11 ist nach rückwärts so weit herausgeklappt, dass diese eine erste Gebrauchslage einnimmt. Die an der Unterseite 15 des Abstellabschnittes 14 angeordneten Anschlagmittel 21 verhindern zusammen mit dem Querstab 8 des Bügels 10', dass die Ablage 11 von selbst weiter in eine zweite Gebrauchslage herausklappt. Die Ablage 11 ist somit aus ihrer Verstaustellung heraus in die erste Gebrauchslage bewegbar, in der sie eine vorbestimmte, durch Anschlagmittel 21 gesicherte Lage einnimmt.

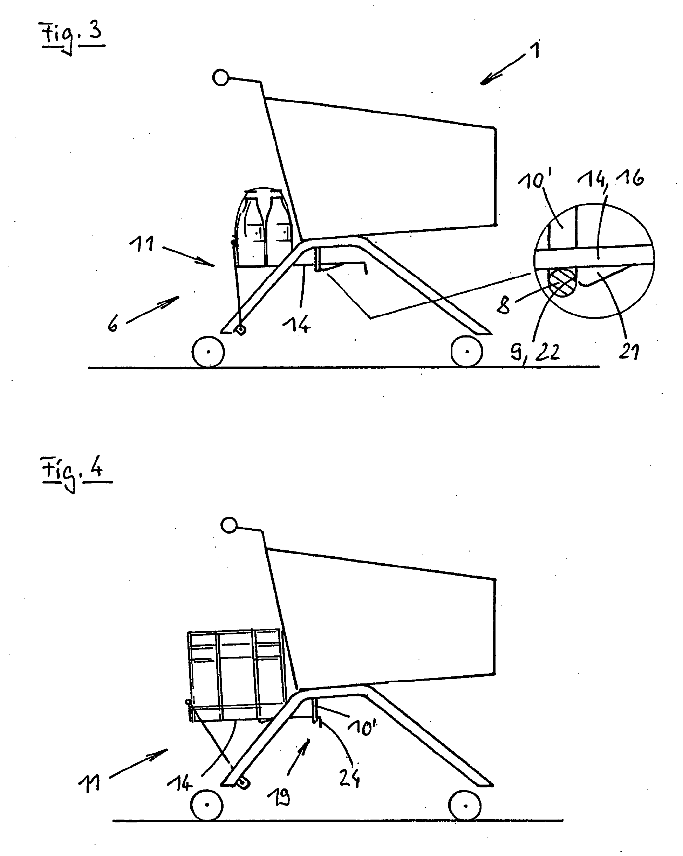

In Fig. 3 ist der in den Fig. 1 und 2 beschriebene Einkaufswagen 1 ebenfalls in der ersten Gebrauchslage, jedoch mit einer auf dem Abstellabschnitt 14 befindlichen PET-Flaschenpackung dargestellt. Ein Detailausschnitt zeigt einen von wenigstens zwei Längsstäben 16 des Ablageabschnittes 14 mit einem von mindestens zwei ortsfest angeordneten Anschlagmitteln 21. Jedes beispielsweise aus Flachstahl gefertigte Anschlagmittel 21 weist eine Schulter 22 auf. Jede Schulter 22 zeigt zum rückwärtigen Bereich 6 des Einkaufswagens 1 und liegt am nach vorne weisenden Bereich 9 des Querstabes 8 an. Die Ablage 11 verbleibt, beladen oder unbeladen, in dieser Lage.

In Fig. 4 befindet sich die Ablage 11 in der zweiten Gebrauchslage, in der sie am weitesten nach hinten vorsteht. Auf der Ablage 11 befindet sich eine Getränkekiste. Am vorderen Ende 19 des Abstellabschnittes 14 befinden sich in bekannter Weise Anschläge 24, die mit dem Bügel 10' verhindern, dass die Ablage 11 über die zweite Gebrauchslage hinaus nach rückwärts herausklappbar ist.

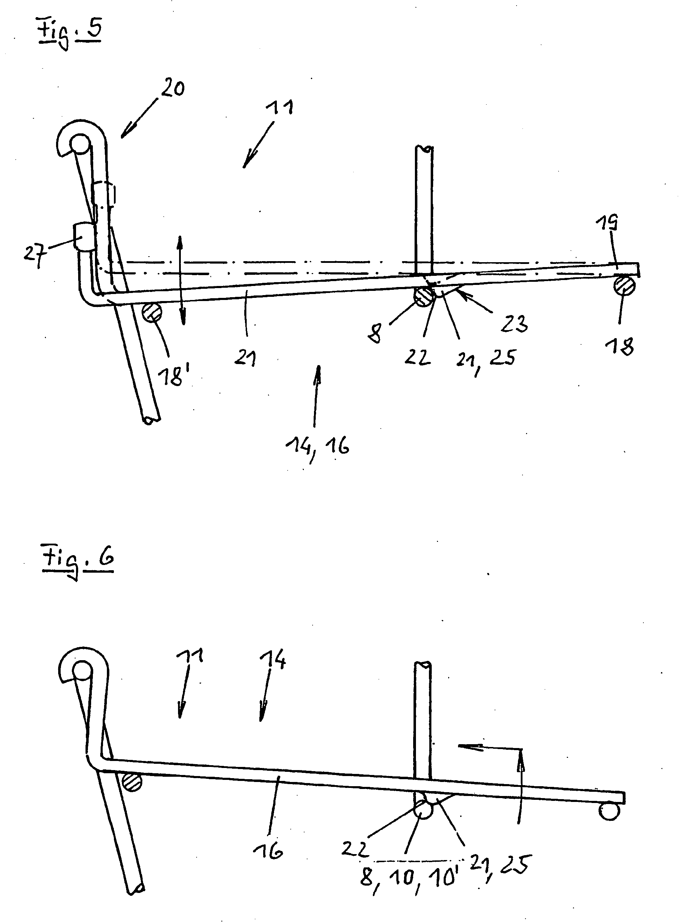

Ausschnittweise zeigt Fig. 5 ein am Abstellabschnitt 14 angeordnetes lageveränderbares Anschlagmittel 21. Der Abstellabschnitt 14 weist neben den beiden Längsstäben 16 auch zwei Querstäbe 18, 18' auf, die zum stabilen Aufbau des Abstellabschnittes 14 erforderlich sind. Zwischen den beiden Längsstäben 16, siehe auch Fig. 1, ist das lageveränderbare stabförmige Anschlagmittel 21 vorgesehen, das mit seinem vorderen Ende 19 am vorne gelegenen Querstab 18 des Abstellabschnittes 14 angeschweißt ist. Das Anschlagmittel 21 weist ein mit einer Schulter 22 ausgestattetes Anschlagteil 25 auf, das im Beispiel am Querstab 8 anliegt. Das Anschlagmittel 21 führt weiter nach hinten und geht in etwa auf Höhe der hinteren Begrenzung 20 des Abstellabschnittes 14 in einen Griff 27 über. Hebt man in der dargestellten ersten Gebrauchslage der Ablage 11 das Anschlagmittel 21 mit Hilfe des Griffes 27 etwas an, ist das Anschlagteil 25 und damit das Anschlagmittel 21 nicht mehr oder nur mehr so im Eingriff mit dem Querstab 8, dass die Ablage 11 komplett nach hinten in die zweite Gebrauchslage herausgeklappt werden kann. Das Anschlagmittel 21 ist in seiner angehobenen Stellung strichpunktiert dargestellt. Durch das Aufheben der Wirkung des Anschlagmittels 21 lässt sich somit die Ablage 11 in die zweite Gebrauchslage bewegen. Eine am Anschlagteil 25 nach hinten ansteigende Schräge 23 erlaubt es, dass die Ablage 11 auch wieder zurück in die Verstaustellung bewegt werden kann, ohne mit dem Querstab 8 zu verhaken.

Bei dem in Fig. 6 gezeigten Ausführungsbeispiel sind die Anschlagmittel 21 durch je ein Anschlagteil 25 gebildet, wobei jedes Anschlagmittel 21 jeweils an einem der beiden Längsstäbe 16 des Abstellabschnittes 14 angeordnet ist. In der ersten Gebrauchslage liegen die Anschlagmittel 21 wieder mit ihren Schultern 22 am Querstab 8 des als Bügel 10' gestalteten Führungsittels 10 an. Bei diesem Beispiel sind nun die Schultern 22 so gestaltet, dass bei einem behutsamen Herausklappen der Ablage 11 die Anschlagmittel 21 ihre Sperrwirkung entfalten, indem sie am Querstab 8 anliegen oder anschlagen und eine Weiterbewegung der Ablage 11 in die zweite Gebrauchslage verhindern. Bei einem raschen und energischen Herausklappen der Ablage 11 hingegen überspringen die Anschlagmittel 21 den Querstab 8, so dass die Ablage 11, nur für einen kurzen Moment die erste Gebrauchslage einnehmend, sofort die zweite Gebrauchslage aufsucht. Auch bei diesem Ausführungsbeispiel lässt sich durch Aufhebung der Wirkung der Anschlagmittel 21 die Ablage 11 in die zweite Gebrauchslage bewegen.

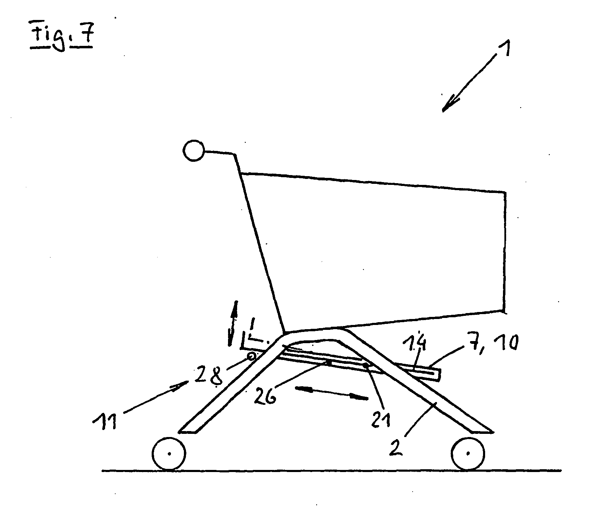

Fig. 7 zeigt einen Einkaufswagen 1, dessen Ablage 11 in bekannter Weise in durch Führungen 7 gebildete, am Fahrgestell 2 befindliche Führungsmittel 10 längsbewegbar gelagert sind. Die hinten an wenigstens einer Stütze 28 abgestützte Ablage 11 befindet sich in der Nichtgebrauchslage. Am Abstellabschnitt 14 der Ablage 11 ist zu beiden Längsseiten je eine Anschlagmittel 21 angeordnet, die mit an den Führungen 7 angeordneten Anschlägen 26, Vertiefungen, Erhöhungen und dergleichen zusammenwirken, wenn die Ablage 11 nach hinten herausgezogen wird. Schlagen bei diesem Vorgang die Anschlagmittel 21 an den Anschlägen 26 oder dergleichen an, hat die Ablage 11 ihre erste Gebrauchslage erreicht, in der sie ein Stück weit nach hinten vorragt und zur Aufnahme kleinerer Gegenstände geeignet ist. Hebt man, wie strichpunktiert dargestellt, nun die Ablage 11 hinten etwas an, wird die Versperrung zwischen den Anschlagmitteln 21 und den Anschlägen 26 usw. aufgehoben und die Ablage 11 lässt sich weiter nach hinten herausziehen, bis diese die zweite Gebrauchslage erreicht hat, aus der sie nicht mehr weiter nach rückwärts bewegt werden kann. Auch bei diesem Ausführungsbeispiel nutzt man das Aufheben der Wirkung der Anschlagmittel 21, um die Ablage 11 weiter nach rückwärts in die zweite Gebrauchslage zu bewegen. Ebenso nimmt die Ablage 11 in der ersten Gebrauchslage durch die Wirkung der Anschlagmittel 21 eine vorbestimmte gesicherte Lage ein.

Wie lange die Ablage 11, um die zweite Gebrauchslage zu erreichen, in der ersten Gebrauchslage verweilt, bleibt dem Benutzer der Ablage 11 des Einkaufswagens 1 überlassen. Beim schnellen Herausbewegen aus der Verstaustellung überspringt die Ablage 11 quasi ihre erste Gebrauchslage, um sofort in die zweite Gebrauchslage überzugehen. Bewegt man die Ablage 11 hingegen langsam aus der Verstaustellung, bleibt die Ablage 11 so lange in ihrer ersten Gebrauchslage, bis man sie unter Aufhebung der Wirkung der Anschlagmittel 21 in die zweite Gebrauchslage überführt.

Im Sinne einer Erweiterung der Erfindung ist es durchaus möglich, am Abstellabschnitt 14 in einer Entfernung zum wenigstens einen Anschlagmittel 21 mindestens ein weiteres gleichwirkendes Anschlagmittel 21 so vorzusehen, dass sich die Ablage 11 unter Aufhebung der Wirkung des wenigstens einen weiteren Anschlagmittels 21 aus der zweiten Gebrauchslage in eine dritte Gebrauchslage bewegen lässt. Die Sicherung der Ablage 11 in der zweiten Gebrauchslage geschähe dann auf gleiche Weise wie in der ersten Gebrauchslage praktiziert. In ebenfalls gleicher Weise wären sogar weitere Gebrauchslagen der Ablage 11 möglich, sofern dies als zweckmäßig erscheint.

## Patentansprüche

1. Stapelbarer Einkaufswagen (1), mit einem Fahrgestell (2), das wenigstens einen Korb (4) trägt, mit einer Schiebeeinrichtung (3) und mit einer im rückwärtigen Bereich (6) angeordneten Ablage (11), die einen Abstellabschnitt (14) zur Aufnahme von Gegenständen aufweist, wobei die Ablage (11) unter Inanspruchnahme von mindestens einem Führungsmittel (10) aus einer Verstaustellung nach rückwärts herausklappbar oder herausziehbar ist und wobei die Ablage (11) in einer ersten Gebrauchslage zum Abstellen kleinerer Gegenstände geeignet und in einer zweiten Gebrauchslage zur Aufnahme größerer Gegenstände, insbesondere von Getränkekisten bestimmt ist, **dadurch gekennzeichnet, dass** die Ablage (11) aus der Verstaustellung heraus in die erste Gebrauchslage bewegbar ist, in der sie eine vorbestimmte, durch mindestens ein Anschlagmittel (21) gesicherte Lage einnimmt, aus der sie sich durch Aufhebung der Wirkung des wenigstens einen Anschlagmittels (21) in die zweite Gebrauchslage bewegen lässt.

2. Stapelbarer Einkaufswagen nach Anspruch 1, **dadurch gekennzeichnet, dass** das wenigstens eine Anschlagmittel (21) am Abstellabschnitt (14) angeordnet ist.

3. Stapelbarer Einkaufswagen nach Anspruch 1 oder 2, **dadurch gekennzeichnet, dass** das wenigstens eine Anschlagmittel (21) in der ersten Gebrauchslage der Ablage (11) am wenigstens einen Führungsmittel (10) anliegt

4. Stapelbarer Einkaufswagen nach einem der Ansprüche 1 bis 3, **dadurch gekennzeichnet, dass** das wenigstens eine Anschlagmittel (21) entweder ortsfest oder lageveränderbar am Abstellabschnitt (14) angeordnet ist.

5. Stapelbarer Einkaufwagen nach einem der Ansprüche 1 bis 4, **dadurch gekennzeichnet, dass** wenigstens ein weiteres Anschlagmittel (21) vorgesehen und am Abstellabschnitt (14) so angeordnet ist, dass sich die Ablage (11) aus der zweiten Gebrauchslage, in der sie eine vorbestimmte, durch das mindestens eine weitere Anschlagmittel (21) gesicherte Lage einnimmt, durch Aufhebung der Wirkung des wenigstens einen weiteren Anschlagmittels (21) in eine dritte Gebrauchslage bewegen lässt.

## Claims

1. A nestable shopping trolley (1) with a wheel frame (2) carrying at least one basket (4), with a pushing arrangement (3) and with a shelf (11) which is arranged in the rearward region (6) and has a receiving portion (14) for holding objects, wherein the shelf (11) is pivotable or extendable rearwards from a stowage position by means of at least one guide means (10) and wherein the shelf (11) is suitable for receiving smaller objects in a first position of use and is intended to hold larger objects, especially boxes of drink, in a second position of use, **characterised in that** the shelf (11) is movable from the stowage position into the first position of use, in which it adopts a predetermined position secured by at least one stop means (21) and from which it can be moved into the second position of use by counteracting the effect of the at least one stop means (21).

2. A nestable shopping trolley according to claim 1, **characterised in that** the at least one stop means (21) is arranged on the receiving portion (14).

3. A nestable shopping trolley according to claim 1 or 2, **characterised in that** the at least one stop means (21) rests against the at least one guide means (10) in the first position of use of the shelf (11).

4. A nestable shopping trolley according to any one of claims 1 to 3, **characterised in that** the at least one stop means (21) is either fixedly or displaceably arranged on the receiving portion (14).

5. A nestable shopping trolley according to any one of claims 1 to 4, **characterised in that** at least one further stop means (21) is provided and is arranged on the receiving portion (14) so that the shelf (11) can be moved out of the second position of use, in which it adopts a predetermined position secured by the at least one further stop means (21), into a third position of use by counteracting the effect of the at least one further stop means (21).

## Revendications

1. Chariot à provisions (1) emboîtable, comprenant un châssis de roulement (2) portant au moins un panier (4) ; un système de poussée (3) ; et un reposoir (11) qui est disposé dans la région postérieure (6) et comporte une zone de dépôt (14) destinée à recevoir des objets, le reposoir (11) pouvant être déployé ou extrait par pivotement vers l'arrière à partir d'une position de remisage, avec le concours nécessaire d'au moins un moyen de guidage (10), sachant que ledit reposoir (11) se prête au dépôt d'objets de petite taille dans une première position d'utilisation et est destiné à recevoir, dans une seconde position d'utilisation, des objets de grande taille, notamment des caisses de boissons, **caractérisé par le fait que** ledit reposoir (11) est mobile, depuis la position de remisage, vers la première position d'utilisation dans laquelle il prend un emplacement prédéterminé, arrêté par au moins un moyen de butée (21), à partir duquel il peut être amené à la seconde position d'utilisation par neutralisation de l'effet exercé par ledit moyen de butée (21) prévu au minimum.

2. Chariot à provisions emboîtable selon la revendication 1, **caractérisé par le fait que** le moyen de butée (21), prévu au minimum, se trouve dans la zone de dépôt (14).

3. Chariot à provisions emboîtable selon la revendication 1 ou 2, **caractérisé par le fait que**, dans la première position d'utilisation du reposoir (11), le moyen de butée (21) prévu au minimum est en applique sur le moyen de guidage (10) prévu au minimum.

4. Chariot à provisions emboîtable selon l'une des revendications 1 à 3, **caractérisé par le fait que** le moyen de butée (21) prévu au minimum occupe, sur la zone de dépôt (14), une position soit fixe, soit variable.

5. Chariot à provisions emboîtable selon l'une des revendications 1 à 4, **caractérisé par le fait qu'**au moins un moyen supplémentaire de butée (21) est prévu et occupe, sur la zone de dépôt (14), une position telle que le reposoir (11) puisse être amené à une troisième position d'utilisation, par neutralisation de l'effet exercé par le moyen supplémentaire de butée (21) prévu au minimum, à partir de la deuxième position d'utilisation dans laquelle il prend un emplacement prédéterminé, arrêté par ledit moyen supplémentaire de butée (21) prévu au minimum.
